# EUROPEAN PATENT SPECIFICATION

(11) **EP 0 266 184 B1**
(45) Date of publication and mention of the grant of the patent: **12.04.1995**
(21) Application number: 87309516.0
(22) Date of filing: 28.10.1987
(51) Int. Cl.: G02F 1/137

(54) **Projection-type display device**
Anzeigevorrichtung vom Projektionstyp
Dispositif d'affichage du type à projection

(30) Priority: 31.10.1986 JP 260253/86; 23.12.1986 JP 307282/86; 23.12.1986 JP 307283/86; 21.07.1987 JP 181333/87
(43) Date of publication of application: 04.05.1988
(73) Proprietor: SEIKO EPSON CORPORATION, Shinjuku-ku Tokyo-to (JP)
(72) Inventor: Aruga, Shuji, Suwa-shi Nagano-ken (JP)
(74) Representative: Sturt, Clifford Mark

(56) References cited:
- SID INTERNATIONAL SYMPOSIUM, DIGEST OF TECHNICAL PAPERS, 1977, pages 104-105, Society for Information Display, CA, US; W.P. BLEHA et al.: "The use of the hybrid field effect mode liquid crystal light valve with visible spectrum projection light"
- SID INTERNATIONAL SYMPOSIUM, DIGEST OF TECHNICAL PAPERS, 1977, pages 106-107, Society for Information Display, CA, US; A.D. JACOBSON et al.: "A new color-TV projector"
- PATENT ABSTRACTS OF JAPAN, vol. 10, no. 352 (E-458), 27th November 1986; & JP-A-61 150 487

## Description

This invention relates to projection-type liquid crystal display devices.

Conventional projection-type display devices using light crystal light valves as shown in JP-A-179723/85, JP-A-35481/86 and JP-A-150487/86. In the conventional projection-type display devices, red, green and blue light, controlled by liquid crystal light valves, is combined by additive colour mixing, using a dichroic mirror, a dichroic mirror prism or the like, and the combined image is projected onto a screen through a projection lens. Liquid crystal light valves employing the twisted nematic mode (hereinafter referred to as TN mode) and driven by an active switching array are used because of their high resolution, high contrast ratio and drivability with low voltage. These conventional projection-type display devices have the advantages of compactness and lightweight over projection-type display devices using cathode ray tubes (CRT).

However, these conventional projection-type display devices suffer from a number of drawbacks. Since the photoelectric transfer characteristics of the TN mode is dependent on the wavelength of incident light, a projection-type display device using liquid crystal light valves shows undesirable colouration in the gray scale and also erroneously shows a different colour from the designated one.

The present invention seeks to provide a projection-type display device which is excellent in terms of gray scale and colour reproducibility.

According to the present invention there is provided a projection-type display device with the features of claim 1.

In one embodiment the thickness of the layer of liquid crystal material in each light valve is substantially the same.

In another embodiment the birefringence of the liquid crystal material in each light valve is substantially the same.

The invention is illustrated, merely by way of example, in the accompanying drawings, in which:-
Figure 1 is an exploded perspective view of a TN liquid crystal light valve for a projection-type display device according to the present invention;
Figure 2 shows schematically a projection-type display device according to the present invention;
Figure 3 is a graph showing photoelectric transfer characteristics of TN liquid crystal materials with various values of Δnd/λ;
Figure 4 shows graphically the photoelectric transfer characteristics of red, green and blue light obtained with the projection-type display device of Figure 2; and
Figure 5 is a sectional view of another embodiment of a TN liquid crystal light valve projection-type display device according to the present invention.

The most important factor directly determining photoelectric transfer characteristic in the TN mode is Δnd/λ where Δn is the birefringence of a TN liquid crystal material, d is the thickness of a layer of the liquid crystal material and λ is the wavelength of incident light. Namely, the photoelectric transfer curve is shifted as a function of Δnd/λ.

Therefore, the photoelectric transfer characteristic can be kept uniform between individual incident beams by approximately equalising Δnd/λ for three TN liquid crystal light valves in a projection-type display device according to the present invention for controlling individual colours of light. In the case of a projection-type display device using three TNB liquid crystal light valves in which Δnd for red light is the greatest of the three colours of light, Δnd of blue light is the least of the three colours of light and Δnd of green light is intermediate, depending on the individual wavelengths, the combined image presents a neutral gray scale as well as excellent colour reproducibility.

Further, Δnd can easily be controlled at low cost by using TN liquid crystal materials with different Δn and a constant thickness. Thus the TN liquid crystal light valves may be assembled in the same process and thereafter liquid crystal cells of the TN liquid crystal light valves are filled with liquid crystal material having different values of Δn. Thus, the present invention may be accomplished without increasing the number of manufacturing steps.

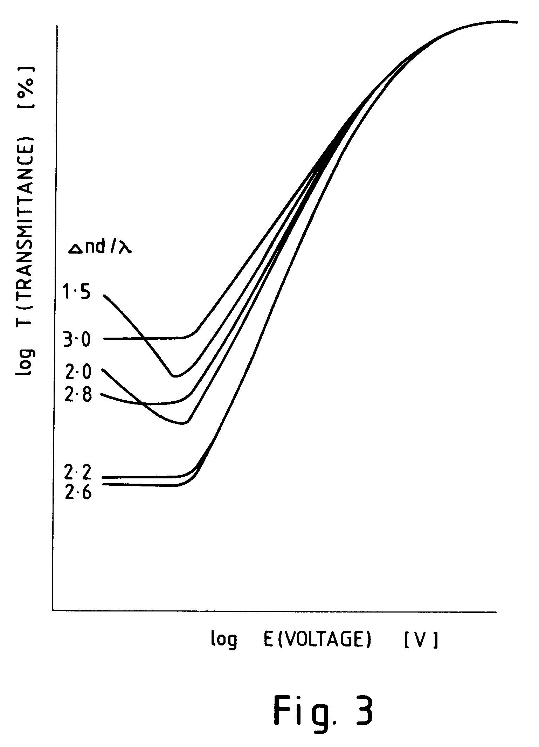

Further, the photoelectric transfer characteristics of TN liquid crystal light valves having a twist angle of 90° or less have been investigated and it has been shown by the applicants that the optimum value of Δnd/λ is greater than 2.2 and less than 2.6, i.e. 2.2 < Δnd/λ <2.6. As is clear from Figure 3 which shows graphically a photoelectric transfer curve in which transmittance T is plotted against voltage E for various values of Δnd/λ of TN liquid crystal materials, the photoelectric transfer curve shows the longest linearity in the range 2.2 < Δnd/λ <2.6 and light leakage at a black level is the lowest. When Δnd/λ is 2.2 or less, the linearity is relatively short and the transmittance voltage curve has an inverted portion. When Δnd/λ is 2.6 or more, the dynamic range of the contrast ratio is reduced. Therefore, for a video image, the optimum photoelectric transfer chraracteristics for colour reproducibility, colour purity, and contrast ratio are realised with the above range of Δnd/λ.

Generally, the dominant wavelength of red light is 0.62 »m, the dominant wavelength of green light is 0.54 »m, and the dominant wavelength of blue light is 0.46 »m. Therefore, for an optimum value of Δnd of individual colours of light, Δnd of red light is greater than 1.4 »m and less than 1.6 »m, i.e. 1.4 »m < Δnd<1.6 »m, Δnd of green light is greater than 1.2 »m and less than 1.4 »m, i.e. 1.2 »m< Δnd<1.4 »m and Δnd of blue light is greater than 1.0 »m and less than 1.2 »m, i.e. 1.0 »m< Δnd<1.2 »m. Namely, TN liquid crystal materials having different values Δn are held in the liquid crystals cells so that Δnd of red light is the greatest of the three, that of blue light is the smallest and that of green light is intermediate therebetween, and Δnd of each TN liquid crystal light valve is set in the above predetermined range. As a result, a projection-type display device which has very excellent gray scale, colour reproducibility, colour purity, contrast ratio, etc. is achieved and a projected image without inversion of the gray scale can be provided inexpensively without involving complicated manufacturing processes.

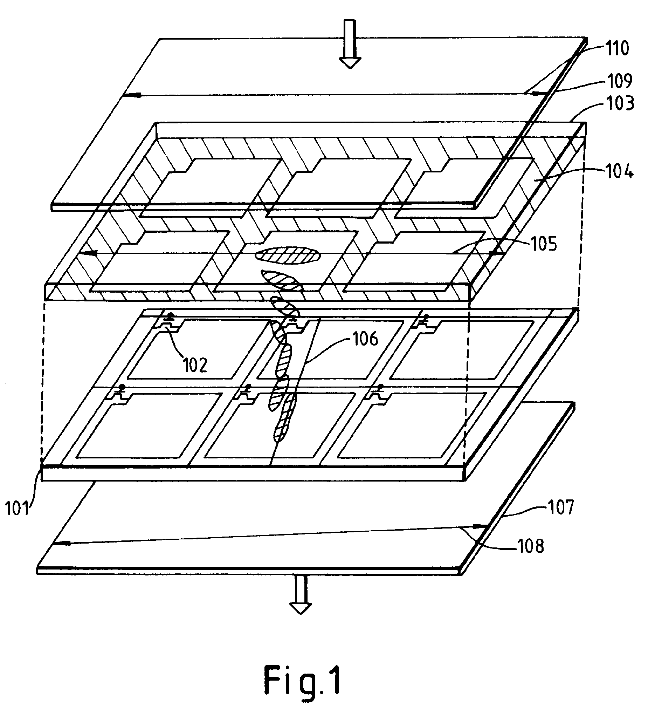

Figure 1 is an exploded perspective view of a TN liquid crystal light valve for a projection-type display device according to the present invention. As a means for driving the TN liquid crystal light valve, a plurality of matrix-arranged polysilicon thin film transistors (TFTs) 102 are formed on a transparent substrate 101. A light shielding layer 104 is provided on an opposed substrate 103 in order to shield at least the TFTs. In this example, polysilicon TFTs are used as the driving means but amorphous silicon TFTs, compound semiconductor TFTs, elements with two terminals utilising diode characteristics such as ring-diodes, MIMs or simple matrix driving may be employed. An organic polymer film (not shown) as an aligning layer is formed on the substrates 101,103 and aligning treatment is performed so that liquid crystal molecules align along the directions of an axis 105 or an axis 106. The twist angle between the axes 105,106 is 80°. Three similar liquid crystal cells having thicknesses of 5 »m, 6 »m and 7 »m respectively are formed by the combination of the substrates 101,103 and by the use of a spherical spacer (not shown) to maintain a predetermined separation therebetween. Each liquid crystal cell is filled with a TN liquid crystal material having Δn of 0.22, thus providing a TN liquid crystal light valve for controlling red light whose Δnd is 0.154, a TN liquid crystal light valve for controlling green light whose Δnd is 0.132, and a TN liquid crystal light valve for controlling blue light whose Δnd is 0.11. The above cell thickness d and the birefringence Δn are not limited to the specific values Δnd given. However, the value Δnd of the three colours should be determined so that Δnd of red light is the greatest of the three, Δnd of blue light is the least of the three and Δnd of green light is intermediate therebetween. Compared with a conventional projected image, halftone colour is improved by optimising at least two light colours.

For example, Δnd of red light should be greater than that of green light. Furthermore, if Δnd of red light is greater than 1.4 »m and less than 1.6 »m, i.e. 1.4 »m< Δnd<1.6 »m, Δnd of green light is greater than 1.2 »m and less than 1.4 »m, i.e. 1.2 »m< Δnd<1.4 »m and Δnd of blue light is greater than 1.0 »m and less than 1.2 »m, i.e. 1.0 »m< Δnd<1.2 »m, then higher quality images can be obtained. Each of the three liquid crystal light valves have polarisers 109,107 between which the respective liquid crystal cell is sandwiched. The polariser 109 is provided on the incident light side of the TN liquid crystal light valve so that its transmission axis 110 is parallel to the axis 105 of the substrate 103 on which light is incident. The polariser 110 is provided on the side from which light passes out of the TN liquid crystal light valve so that its transmission axis 108 is perpendicular to the axis 106 of the substrate 101. The position of the polarisers may be twisted by 90° relative to each other if desired.

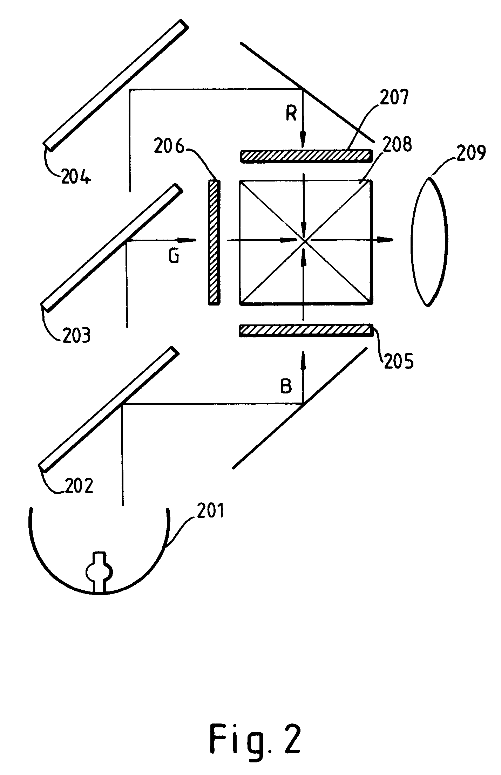

A projection-type display device according to the present invention is shown in Figure 2 using three TN liquid crystal light valves. White light from a light source 201 is divided into three colours by a dichroic mirror 202 for reflecting blue light, a dichroic mirror 203 for reflecting green light and a dichroic mirror 204 for reflecting red light and, as mentioned above, each reflected colour of light is introduced into a corresponding TN liquid crystal light valve whose Δnd is different from the others, i.e. a TN liquid crystal light valve 207 for controlling red light, a TN liquid crystal light valve 206 for controlling green light, and a TN liquid crystal light valve 205 for controlling blue light, thereby forming three images. The three images are combined by a dichroic mirror prism 208 comprising four right-angled prisms each of which has a dichroic mirror surface embracing the right-angle, and then the combined image is projected by a lens 209. In place of the dichroic mirror 208 three dichroic mirrors can be used.

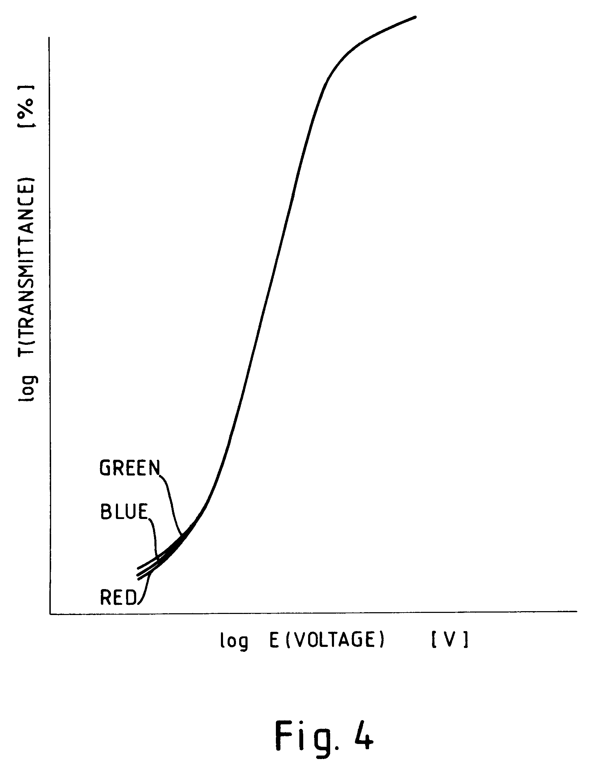

Figure 4 shows the photoelectric transfer characteristics of red, green and blue light obtained with the projection-type display device of Figure 2. In this example, the photoelectric transfer characteristic of each colour is approximately the same since Δnd of the three colours of light are determined so that Δnd of red light is the greatest of the three and greater than 1.4 »m and less than 1.6 »m, i.e. 1.4 »m< Δnd<1.6 »m, Δnd of blue light is the least of the three and greater than 1.0 »m and less than 1.2 »m, i.e. 1.0 »m<Δnd<1.2 »m, and Δnd of green light is intermediate and greater than 1.2 »m and less than 1.4 »m, i.e. 1.2 »m< Δnd<1.4 »m. Further, the photoelectric transfer characteristic of each colour is substantially linear. Furthermore, the black level can be set lower and there is no inversion of the gray scale. Therefore, the projection-type display device of Figure 2 using three TN liquid crystal light valves allows the presentation of neutral halftone display with high contrast. Accordingly, a projected image which is excellent in colour reproducibility is obtained. Moreover, the reproducibility is greatly improved in the vicinity of the black level which has lower transmittance.

In a modification of the projection-type display device of Figure 2, under vacuum, each liquid crystal cell is filled with a nematic liquid crystal material which has different Δn from that of the other liquid crystal cells. In this modification the thickness of each liquid crystal cell is the same, i.e. 7 microns. Thus, the TN liquid crystal light valve for red light employs liquid crystal material having Δn of 0.215, the TN liquid crystal light valve for green light employs liquid crystal material having Δn of 0.19, and the TN liquid crystal light valve for blue light employs liquid crystal material having Δn of 0.165. The values of Δn are not limited to those given above. With the thickness of the liquid crystal cells constant, Δn of the TN liquid crystal light valve for red light is the greatest, Δn of the TN liquid crystal light valve for blue light is the least and Δn of the TN liquid crystal light valve for green light is intermediate.

When Δn is controlled with respect to at least two colours, halftones can be improved. Further, if Δnd of each light valve is determined so that Δnd of the TN liquid crystal light valve for red light is greater than 1.4 »m and less than 1.6 »m, i.e. 1.4 »m< Δnd<1.6 »m, Δnd of the TN liquid crystal light valve for green light is greater than 1.2 »m and less than 1.4 »m, i.e. 1.2 »m< Δnd<1.4 »m, and Δnd of the TN liquid crystal light valve for blue light is greater than 1.0 »m and less than 1.2 »m, i.e.. 1.0 »m< Δnd<1.2 »m, more excellent image quality is obtained.

In this modification halftone colours hardly change in respect to all the halftones, and neutral colour is kept. Further, colour reproducibility is obtained to the same degree as with a CRT. Colour reproducibility is excellent in the vicinity of reflectance near to black level which is hard to obtain with the conventional projection-type display devices. In this example, all the TN liquid crystal light valves are manufactured by the same process and consequently cost can be reduced. Further, if the thickness of the liquid crystal cell does not meet with the predetermined value, the difference between the obtained cell thickness and the predetermined value can be corrected by adjusting the value of Δn (e.g. a liquid crystal cell having a thickness of 8 »m is filled with liquid crystal material having Δn of 0.187, thereby obtaining a TN liquid crystal light valve for red light). Therefore, a liquid crystal cell which could be regarded as defective in view of the fact that its thickness differs from the predetermined value, can still be used to improve manufacturing yield. Further, viscosity and threshold voltage of each liquid crystal material can be determined in advance and have substantially the same values. Thus it is not necessary to vary the driving voltage to match each twisted liquid crystal light valve and response speed for each colour is substantially the same. As to the liquid crystal material, a liquid crystal mixture which has triple bonds in its molecular structure is preferable since such a nematic liquid crystal materials allows the response speed to be increased more than with other types of liquid crystal materials.

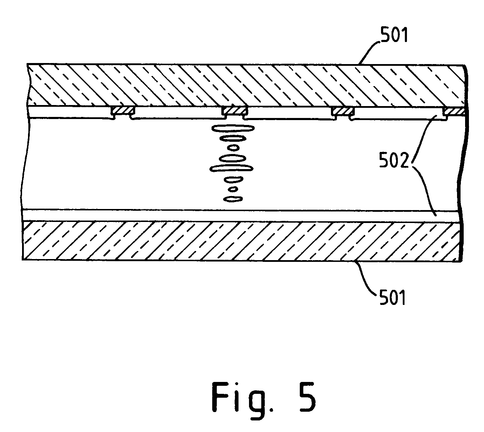

Figure 5 shows a sectional view of another embodiment of a TN liquid crystal light valve for a projection-type display device. The TN liquid crystal light valve of Figure 5 has a simple matrix liquid crystal cell in which strip-type transparent electrodes 502 are formed on upper and lower transparent substrates 501. An aligning layer composed of an organic molecular film is formed on each of the upper and lower substrates. In this example, the twist angle of nematic liquid crystal material between the substrates is 210° and the thickness of the liquid crystal cell is 6 microns. The TN liquid crystal light valve for red light, the TN liquid crystal light valve for green light and the TN liquid crystal light valve for blue light are filled with TN liquid crystal material having Δn of 0.165, 0.15, and 0.12, respectively. A projection-type display device as shown in Figure 2 is then formed using the three TN liquid crystal light valves.

The combined image obtained by such a projection-type display device presents neutral halftones and colours as expected. Naturally, a TN display characteristic having a twist angle of 90° or more presents special dependence on Δnd/λ. However, Δnd is controlled according to the wavelength of the incident light, thereby enabling the required photoelectric characteristics to be met. Accordingly, excellent images can be obtained.

As mentioned above, since a projection-type display device according to the present invention has three TN liquid crystal light valves, each of which has approximately the same photoelectric transfer characteristics, the display of halftones and colour reproducibility are excellent.

Further, the black level is reduced and the gray scale is hardly reversed by optimising Δnd for each colour of light. Therefore, the projection-type display device of Figure 2 displays a gray scale without reversal, has a high contrast ratio and high colour purity.

Further, the three TN liquid crystal light valves may be manufactured by the same process.

Furthermore, variation of cell thickness does not affect the characteristics of the projection-type display device if Δn is corrected to give the desired value of Δnd. Therefore, manufacturing yield is improved. Accordingly, a projection-type display device according to the present invention may be produced at relatively low cost.

## Claims

1. A projection-type display device comprising:
a first transmissive type liquid crystal light valve (207) for controlling red light of wavelength λᵣ, said first light valve (207) comprising a layer of thickness d₁ of twisted nematic liquid crystal material with a birefringence Δn₁;
a second transmissive type liquid crystal light valve (206) for controlling green light of wavelength λ_{g}, said second light valve (206) comprising a layer of thickness d₂ of twisted nematic liquid crystal material with a birefringence Δn₂;
a third transmissive type liquid crystal light valve (205) for controlling blue light of wavelength λ_{b}, said third light valve (205) comprising a layer of thickness d₃ of twisted nematic liquid crystal material with a birefringence Δn₃;
characterised in that:${\text{Δn₁.d₁ / λ}}_{\text{r}} {\text{≅ Δn₂.d₂ / λ}}_{\text{g}} {\text{≅ Δn₃.d₃ / λ}}_{\text{b}}$

2. A projection-type display device as claimed in claim 1 in which the thickness d₁, d₂, d₃ of the layer of liquid-crystal material in each light valve (207-205) is substantially the same.

3. A projection-type display device as claimed in claim 1 in which the birefringence Δn₁, Δn₂, Δn₃ of the liquid crystal material in each light valve is substantially the same.

4. A projection-type display device as claimed in any one of the preceding claims in which And of the first, second and third light valves falls within the following range: 2.2 < Δnd / λ < 2.6.

5. A projection-type display device as claimed in any one of the preceding claims, in which the first, second and third light valves are driven by one or more thin film transistors (102) formed on a substrate (101).

6. A projection-type display device as claimed in any preceeding claim in which Δn₁ d₁ of the first light valve (207) is between 1.4 and 1.6, Δn₂ d₂ of the second light valve (206) is between 1.2 and 1.4 and Δn₃ d₃ of the third light valve (205) is between 1.0 and 1.2.

## Patentansprüche

1. Anzeigevorrichtung vom Projektionstyp umfassend:
ein erstes Durchlaßtyp-Flüssigkristall-Lichtventil (2O7) zum Steuern von rotem Licht der Wellenlänge λᵣ, wobei das erste Flüssigkristallichtventil (207) eine Schicht der Dicke d₁ aus verdrehtem, nematischem Flüssigkristallmaterial mit einer Doppelbrechung Δn₁ aufweist;
ein zweites Durchlaßtyp-Flüssigkristall-Lichtventil (206) zum Steuern von grünem Licht der Wellenlänge λ_{g}, wobei das zweite FLüssigkristallichtventil (206) eine Schicht der Dicke d₂ aus verdrehtem, nematischem Flüssigkristallmaterial mit einer Doppelbrechung Δn₂ aufweist;
ein drittes Durchlaßtyp-Flüssigkristall-Lichtventil (205) zum Steuern von blauem Licht der Wellenlänge λ_{b}, wobei das dritte Flüssigkristallichtventil (205) eine Schicht der Dicke d₃ aus verdrehtem, nematischem Flüssigkristallmaterial mit einer Doppelbrechung Δn₃ aufweist;
dadurch gekennzeichnet, daß:${\text{Δn₁·d₁/λ}}_{\text{r}} {\text{≅ Δn₂·d₂/λ}}_{\text{g}} {\text{≅ Δn₃·d₃/λ}}_{\text{b}}$

2. Anzeigevorrichtung vom Projektionstyp nach Anspruch 1, bei welcher die Dicke d₁, d₂, d₃ der Flüssigkristallmaterialschicht in jedem Lichtventil (207-205) im wesentlichen gleich ist.

3. Anzeigevorrichtung vom Projektionstyp nach Anspruch 1, bei welcher die Doppelbrechung Δn₁, Δn₂, Δn₃ Flüssigkristallmaterials in jedem Lichtventil im wesentlichen gleich ist.

4. Anzeigevorrichtung vom Projektionstyp nach einem der vorhergehenden Ansprüche, bei welcher and des ersten, zweiten und dritten Lichtventils in folgenden Bereich fällt: 2,2 < Δnd/λ < 2,6 .

5. Anzeigevorrichtung vom Projektionstyp nach einem der vorhergehenden Ansprüche, bei welcher das erste, zweite und dritte Lichtventil von einem oder mehreren, auf einem Substrat (101) gebildeten Dünnfilmtransistoren (102) angesteuert werden.

6. Anzeigevorrichtung vom Projektionstyp nach einem der vorhergehenden Ansprüche, bei weicher Δn₁d₁ des ersten Lichtventils (207) zwischen 1,4 und 1,6 liegt Δn₂d₂ des zweiten Lichtventils (206) zwischen 1,2 und 1,4 liegt und Δn₁d₃ des dritten Lichtventils (205) zwischen 1,0 und 1,2 liegt.

## Revendications

1. Dispositif d'affichage du type à projection comprenant :
une première diode lumineuse de transmission à cristaux liquides (207) pour commander la lumière rouge de longueur d'onde λᵣ, ladite première diode lumineuse (207) comportant une couche d'épaisseur d₁ de matériau à cristaux liquides nématiques torsadés ayant une biréfringence Δn₁ ;
une seconde diode lumineuse de transmission à cristaux liquides (206) pour commander la lumière verte de longueur d'onde λ_{g}, ladite seconde diode lumineuse (206) comportant une couche d'épaisseur d₂ de matériau à cristaux liquides nématiques torsadés ayant une biréfringence Δn₂ ;
une troisième diode lumineuse de transmission à cristaux liquides (205) pour commander la lumière bleue de longueur d'onde λ_{b}, ladite troisième diode lumineuse (205) comportant une couche d'épaisseur d₃ de matériau à cristaux liquides nématiques torsadés ayant une biréfringence Δn₃ ;
caractérisé en ce que :${\text{Δn₁.d₁/λ}}_{\text{r}} {\text{≅ Δn₂.d₂/λ}}_{\text{g}} {\text{≅ Δn₃.d₃/λ}}_{\text{b}}$

2. Dispositif d'affichage du type à projection selon la revendication 1, dans lequel l'épaisseur d₁, d₂, d₃ de la couche de matériau à cristaux liquides de chaque diode lumineuse (207-205) est sensiblement la même.

3. Dispositif d'affichage du type à projection selon la revendication 1, dans lequel la biréfringence Δn₁, Δn₂, Δn₃ du matériau à cristaux liquides de chaque diode lumineuse est sensiblement la même.

4. Dispositif d'affichage du type à projection selon l'une quelconque des revendications précédentes, dans lequel le produit Δnd de la première, de la seconde et de la troisième diodes lumineuses se situe dans la plage suivante : 2,2 < Δnd / λ < 2,6.

5. Dispositif d'affichage selon l'une quelconque des revendications précédentes, dans lequel la première, la seconde et la troisième diodes lumineuses sont commandées par un ou plusieurs transistors (102) à films minces formés sur un substrat (101).

6. Dispositif d'affichage du type à projection selon l'une quelconque des revendications précédentes, dans lequel Δn₁d₁ pour la première diode lumineuse (207) est compris entre 1,4 et 1,6, Δn₂d₂ pour la seconde diode lumineuse (206) est compris entre 1,2 et 1,4 et Δn₃d₃ pour la troisième diode lumineuse (205) est compris entre 1,0 et 1,2.
